## Europäisches Patentamt
## European Patent Office
## Office européen des brevets

(11) Veröffentlichungsnummer: **0 154 278**
**A2**

(12) **EUROPÄISCHE PATENTANMELDUNG**

(21) Anmeldenummer: 85102060.2

(22) Anmeldetag: 25.02.85

(51) Int. Cl.⁴: **C 02 F 1/42**
**B 01 J 49/00**

(30) Priorität: 24.02.84 DE 3406724

(43) Veröffentlichungstag der Anmeldung:
11.09.85 Patentblatt 85/37

(84) Benannte Vertragsstaaten:
AT BE CH DE FR GB IT LI LU NL SE

(71) Anmelder: Spiegl, Karl
Landhausstrasse 35
D-7031 Aidlingen(DE)

(72) Erfinder: Spiegl, Peter
Landhausstrasse 35
D-7031 Aidlingen 2(DE)

(74) Vertreter: Wolff, Michael, Dipl.-Phys.
Kirchheimer Strasse 69
D-7000 Stuttgart 75(DE)

(54) Härtefühler für Wasserenthärtungsanlagen.

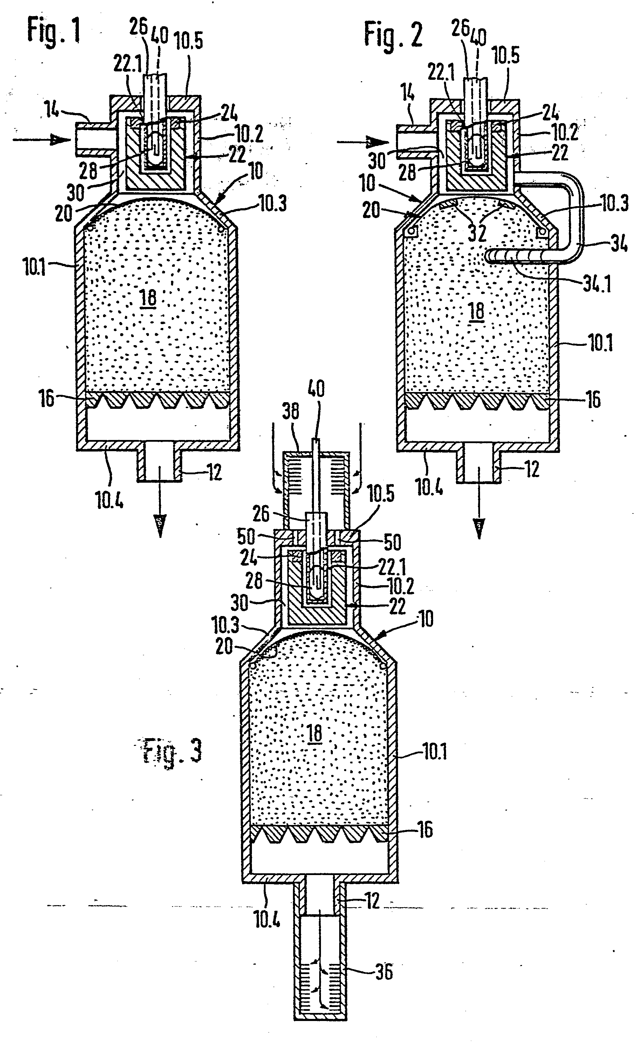

(57) Um bei einem solchen Fühler mit einer Füllung (18) aus ionenaustauschendem Schrumpfharz, welche eine einzige freie Oberfläche aufweist, über der ein Kolben (22) und eine Flachmembran (20) angeordnet sind, die Empfindlichkeit des Fühlers gegen nicht vom Harz erzeugte Kolbenhubkräfte wie Auftriebskräfte durch Gasblasen im Wasser zu beseitigen, welches das Harz durchsickert, wird vorgeschlagen vorzusehen, daß die Membran (20) ständig an der freien Harzoberfläche liegt und der Kolben (22) ständig auf der Harzfüllung (18) lagert, wobei der Kolben (22) spezifisch wesentlich schwerer als Wasser ist und auf der Membran (20) sitzt (Fig. 1).

Fig. 1

M 25 - 0346
0154278

Die Erfindung betrifft einen Härtefühler für Wasserenthärtungsanlagen, mit einer regenerierbaren, sich beim Regenerieren ausdehnenden, in hartem Wasser schrumpfenden Füllung aus ionenaustauschendem Harz, welche eine einzige freie Oberfläche und eine
dieser in Ausdehnungsrichtung gegenüberliegende Unterfläche aufweist, wobei die freie Oberfläche zumindest in einem bestimmten
Fühlerzustand im wesentlichen eben ist und die Normale der Oberfläche dann die Ausdehnungsrichtung darstellt; mit einem Einlaß für Testwasser und einem Auslaß für Testwasser, von denen
zumindest einer auf der Seite der Unterfläche der Harzfüllung
angeordnet ist, sowie einer Flach-Membran; mit einem Kolben, der
wenigstens während der Härtefühlung auf der Harzfüllung lagert,
und mit einem elektrischen Schalter, der durch den Kolben mittelbar zu betätigen ist.

Bei einem aus der EP 0 016 408 B1, Figur 3 (Spiegl), bekannten
Härtefühler dieser Art sind der Einlaß und der Auslaß für Testwasser auf der Seite der Unterfläche der Harzfüllung angeordnet,
sodaß sich also Ein- und Auslaß auf der Unterseite des Kolbens
befinden, und ist das Zentrum der Membran auf einer den gefederten Kolben tragenden Stange befestigt, die den elektrischen
Schalter mechanisch betätigt. Die Befestigung des Membranzentrums auf der Kolbenstange dient dem Abheben des Kolbens
von der Harzfüllung mittels Unterdruck, der auf der dem Kolben
abgewandten Seite der Membran erzeugt werden kann und die schwache
Federkraft leicht überwindet.

Aus der EP 0 016 408 B1 ist es bei ähnlichen Härtefühlern auch
bekannt, daß der Kolben, der spezifisch ein wenig schwerer als
Wasser ist, alternativ ständig auf der Harzfüllung lagert (Fig.
7 - 9 und 11) und/oder daß der Testwasser-Einlaß auf der Seite
der freien Oberfläche der Harzfüllung angeordnet ist (Fig. 11
und 12). In dem Alternativfall kann es, auch bei obenliegendem
Einlaß, vorkommen, daß aufsteigende Gasblasen, die mit dem
Testwasser herangeführt wurden, den auf der freien Oberfläche
der Harzfüllung schwimmenden Kolben von dieser abheben und
dadurch einen Zustand des Harzes vortäuschen, in dem es
weniger als tatsächlich erschöpft erscheint, sodaß die Regene-

0154278

rierungsphase zu spät eingeleitet wird. Eine aufwärts gerichtete Testwasserströmung hat die gleiche Wirkung.

Ferner ist es von einem Härtefühler ähnlicher Art her bekannt, daß die Membran, deren Zentrum gefedert und mit einer zu Schaltzwecken vorhandenen Schubstange versehen ist, ständig an der freien Oberfläche der Harzfläche liegt, die an ihrer der Membran abgewandten Unterfläche mit Ein- und Auslaß für Testwasser versehen ist.

Die erwähnten bekannten Härtefühler mit schwimmenden Kolben sind hinsichtlich der Genauigkeit der Härteanzeige verbesserungsfähig.

Daher liegt der Erfindung die Aufgabe zugrunde, einen Härtefühler der eingangs genannten Art zu schaffen, welcher weniger störanfällig ist, indem seine Empfindlichkeit gegen nicht vom Harz erzeugte Kolbenhubkräfte beseitigt wird.

Diese Aufgabe ist bei einem Härtefühler der eingangs genannten Art erfindungsgemäß dadurch gelöst, daß die Membran in an sich bekannter Weise ständig an der freien Oberfläche der Harzfüllung liegt und der Kolben in an sich bekannter Weise ständig auf der Harzfüllung lagert, wobei der Kolben spezifisch wesentlich schwerer als Wasser ist und auf der Membran sitzt.

Durch diese Kombination an sich bekannter sowie neuer Merkmale und durch die Verwirklichung dieser Merkmalskombination an einem Härtefühler der eingangs genannten Art wird bei vorausgesetzter hoher Biegsamkeit der dünn ausführbaren Membran vorteilhafterweise erreicht, daß der Kolben, selbst wenn er zweckmäßigerweise spezifisch schwerer als das Harz ist, in dieses nicht einsinken kann und daß Harzpartikel nicht auf die Kolbenseite der Membran überwechseln und dort in den Ringspalt zwischen Kolben und Fühlergehäuse klemmend eindringen können, sodaß der Kolben dem Sich-Heben und -Senken der freien Harzoberfläche sensibel und vor allem zuverlässig folgt.

Falls die Membran nicht vorzugsweise semipermeabel ist, kann der notwendige Wasserdruckausgleich für beide Membranseiten zugleich dafür sorgen, daß Testwasser vom Einlaß auf der einen Membranseite zum Auslaß auf der anderen Membranseite durch die

0154278

Harzfüllung gelangen kann, falls Ein- und Auslaß auf verschiedenen Membranseiten liegen, weil z.B. in an sich bekannter Weise der Testwasser-Einlaß auf der Seite der freien Oberlfäche der Harzfüllung angeordnet ist.

Bei einer bevorzugten Ausführungsform des erfindungsgemäßen Härtefühlers ist die Membran wasserdurchlässig und harzundurchlässig. Damit ist auf einfachste Weise gewährleistet, daß die feste Phase ihren Zusammenhalt nicht verliert und demnach ein Druckausgleich stattfindet. Zweckmäßigerweise besteht die Membran entweder aus einem von Natur aus elastischen Gewirke oder aus sprichwörtlich elastischem Gummi und wenigstens einem siebartigen Einsatz in der Gummimembran, sodaß das Testwasser das Gewirke bzw. die siebartigen Einsätze ungehindert passieren kann und die Harzpartikel dort in die Harzfüllung zurückgehalten werden.

Im folgenden sind Ausgestaltungen und Weiterbildungen des erfindungsgemäßen Härtefühlers durch ihre wesentlichen Merkmale charakterisiert:
Der wasserhaltige Raum über der Membran und der harzhaltige Raum unter der Membran sind mittels eines Ausgleichskanals zwecks Wasserdruckausgleich für beide Membranseiten verbunden, wobei die Kanalmündung in die Harzfüllung ein harzundurchlässiges Gitter aufweist. Diese Ausgestaltung wird man wählen, wenn die Membran aus Gummi besteht und mehrere siebartige Einsätze aufweist, um den Wasserdruckausgleich zu erleichtern und dadurch zu verbessern.
Als elektrischer Schalter ist in an sich bekannter Weise ein berührungslos betätigbarer Schalter vorgesehen, mit dem von der durch die Erfindung erhaltenen Möglichkeit der berührungslosen Schalterbetätigung Gebrauch gemacht wird.
Der Kolben ist in an sich bekannter Weise mit einem Permanentmagneten versehen, der dem eventuell leicht ausgeführten Kolben Gewicht gibt und einen entsprechend ausgestalteten berührungs-

0154278

losen Schalter magnetisch betätigen kann.

Der Kolben weist eine Sackbohrung mit der Membran abgewandter Mündung auf, die von einem Ringmagneten gesäumt ist, und der Kolben ist an einem zylindrischen Träger eines Reed-Schalters verschiebbar angeordnet. Damit ist eine vorzügliche Führung des Kolbens in Ausdehnungsrichtung der Harzfüllung und eine präzise Betätigung des elektrischen Schalters gewährleistet. Falls ein rohrähnliches Gehäuse des Härtefühlers einen die geschrumpfte Harzfüllung größtenteils aufnehmenden, weiteren zylindrischen Abschnitt, einen den Kolben aufnehmenden, engeren zylindrischen Abschnitt und einen Deckel an diesem aufweist, (siehe z.B. EP 0 016 408 B1, Fig. 3), sind die zwei zylindrischen Abschnitte in an sich bekannter Weise durch einen konischen Abschnitt verbunden, an der sich der am oberen Ende des weiteren zylindrischen Abschnittes befestigte Rand der sich in den konischen Abschnitt auswölbenden Membran bei quellendem Harz anlegt; und ist der Gehäusedeckel als Anschlag für den Kolben vorgesehen, der bei Anschlag den sich in den engeren zylindrischen Abschnitt auswölbenden zentralen Teil der Membran niederhält. Der konische Gehäuseabschnitt verhindert den Verschleiß der Membran durch Kantenreibung. Der Kolbenanschlag verhindert eine übermäßige Auswölbung der Membran bis zu deren Platzen.

-8-

010284

Im folgenden ist die Erfindung anhand mehrerer durch die Zeichnung beispielhaft dargestellter Ausführungsformen des erfindungsgemäßen Härtefühlers in Verbindung mit einem Enthärtertank einer im übrigen nicht dargestellten Wasserenthärtungsanlage im einzelnen erläutert. Es zeigt:

        Fig. 1) einen vertikalen Längsschnitt durch eine erste Ausführungsform;

        Fig. 2) einen entsprechenden vertikalen Längsschnitt durch eine zweite Ausführungsform;

        Fig. 3) einen entsprechenden vertikalen Längsschnitt durch eine dritte Ausführungsform;

        Fig. 4) eine schematische Darstellung des Enthärtertankes mit eingelassener dritter Ausführungsform;

und

        Fig. 5) einen den Fig. 1 - 3 entsprechenden vertikalen Längsschnitt durch eine vierte Ausführungsform.

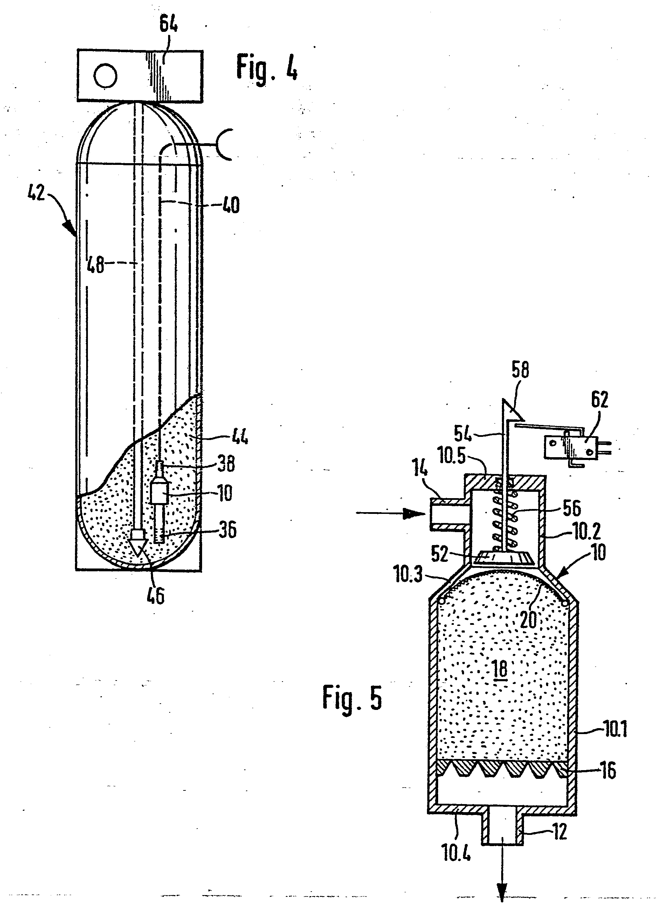

Allen vier Ausführungsformen des erfindungsgemäßen Härtefühlers ist gemeinsam, daß jede ein aus der Zeichnung ersichtliches milchkannenähnliches Profil aufweist, das heißt, daß sein hauptsächlich rohrähnliches Gehäuse 10 einen unteren kreiszylindrischen Abschnitt 10.1 mit größerem Innendurchmesser, einen oberen kreiszylindrischen Abschnitt 10.2 mit kleinerem Innendurchmesser und einen diese beiden verbindenden konischen Abschnitt 10.3 sowie einen senkrecht zur vertikalen Gehäuseachse angeordneten, innen ebenen Boden 10.4 am unteren Ende des Abschnittes 10.1 und einen planparallelen Deckel 10.5 am oberen Ende des Abschnittes 10.2 aufweist. Jeder Boden 10.4 ist mit einem zentral angesetzten Stutzen 12 als Auslaß des Härtefühlers versehen, welcher beispielsweise mittels einer nicht dargestellten Leitung zu einem in Fig. 4 dargestellten Mehrwegeventil 64 der Wasserenthärtungsanlage mit deren Ableitung für weiches Wasser verbindbar ist. Ähnlich ist bei den Ausführungsformen gemäß Fig. 1, 2 und 5, welche für den Ventilanschluß vorgesehen sind, der obere Gehäuseabschnitt 10.2 mit einem radialen Stutzen 14 als Einlaß des Härtefühlers versehen, an welchen eine Leitung angeschlossen werden kann, die den Härtefühler mit dem Enthärter der Anlage zwecks Heranführung von mehr oder weniger enthärtetem Testwasser verbindet.

Oberhalb des Gehäusebodens 10.4 jedes Fühlers befindet sich ein im unteren Gehäuseabschnitt 10.1 höhenverstellbar an diesem gelagerter Siebboden 16, der eine Füllung 18 aus ionenaustauschendem regenerierbarem Schrumpfharz trägt, welche sich im regenerierten Zustand wie gezeichnet bis zum Übergang des mittleren Gehäuseabschnittes 10.3 zum oberen Gehäuseabschnitt 10.2 erstreckt und an ihrer im erschöpften Zustand völlig freien, ungefähr waagrechten Oberfläche mit einer Membran 20 bedeckt ist, deren kreisförmiger Rand am Übergang des mittleren in den unteren Gehäuseabschnitt 10.3 bzw. 10.1 befestigt ist. Infolgedessen wölbt sich die Membran 20 beim Regenerieren der Harzfüllung 18 nach oben aus, während sie bei der ständigen Härtefühlung zunehmend eingeebnet wird.

Bei den Ausführungsformen gemäß Fig. 1 bis 3 ist im oberen Gehäuseabschnitt 10.2 je ein kreiszylindrischer Kolben 22 auf dem Zentrum der Membran 20 gelagert. Der Kolben 22 weist eine Sackbohrung 22.1 mit der Membran 20 abgewandter Mündung auf, die von einem ringförmigen Permanentmagneten 24 gesäumt ist. Bei vollständig regenerierter Harzfüllung 18 schlägt der Kolben 22 an der Innenseite des Gehäusedeckels 10.5 an; dessen Zentrum durchdringt vertikal ein höhenverstellbarer kreiszylindrischer Träger 26 eines Reed-Schalters 28, dessen Höhenlage im oberen Gehäuseabschnitt 10.2 so bestimmt wird, daß der Magnet 24 den Schalter bei erschöpfter, zu regenerierender Harzfüllung 18 berührungslos betätigt, indem er über den Schalter gleitet. Das spezifische Gewicht des Kolbens 22 einschließlich des Magneten 24 soll größer sein als jenes von Wasser mit gerade noch zulässiger Härte und ist zweckmäßigerweise sogar größer als

0154278

jenes des die Füllung 18 bildenden Harzes. Dank der Membran 20 kann der durch den Magneten 24 beschwerte Kolben 22 nicht in die Harzfüllung 18 eindringen und können Harzkörner nicht in den Ringspalt 30 zwischen Kolben und oberem Gehäuseabschnitt 10.2 eindringen.

Bei den Ausführungsformen gemäß den Fig. 1, 3 und 5 besteht die Membran 20 je aus einem elastischen Gewirke vorzugsweise aus Kunstfasern. Dagegen besteht die Membran 20 der zweiten Ausführungsform gemäß Fig. 2 aus Gummi oder dergleichen, wobei mehrere siebartige Einsätze 32 im Gummi vorgesehen sind. In jedem Fall ist die Membran 20 semipermeabel, das heißt, sie läßt zwar Wasser, jedoch nicht Harzkörner hindurch.
Bei der zweiten Ausführungsform gemäß Fig. 2 könnten die Membraneinsätze 32 nicht für den gewünschten Wasserdruckausgleich auf beiden Membranseiten sorgen. Deshalb sind hier der wasserhaltige Raum über der Membran 20 und der harzhaltige Raum unter der Membran mittels eines beliebigen Ausgleichskanales 34 wasserleitend miteinander verbunden, wobei die Kanalmündung 34.1 in die Harzfüllung 18 harzundurchlässig ist.

Bei der dritten Ausführungsform gemäß Fig. 3 ist an den unteren Stutzen 12 ein rohrförmiger Spaltfilter 36 angesetzt, durch den Testwasser den Härtefühler verlassen, aber Harzkörner nicht in diesen eindringen können. Dementsprechend trägt auch der Gehäusedeckel 10.5 einen rohrförmigen Spaltfilter 38, mittels dessen der ganze Härtefühler an einem zum Reed-Schalter 28 führenden elektrischen Kabel 40 aufgehängt ist, wie dies Fig. 4 zeigt, wo der Härtefühler gemäß Fig. 3 am Grund des Enthärtertankes 42 in dessen Harzfüllung 44 so eingebettet ist, daß sein unterer Spaltfilter 36 nahe bei einem Einlaßspaltfilter 46 am unteren Ende eines Entnahmerohres 48 liegt, durch das enthärtetes Wasser dem Tank 42 entnommen wird.
Damit das aus der Harzfüllung 44 des Enthärtertankes 42 in den oberen Spaltfilter 38 eindringende Testwasser in das Gehäuse 10

0154278

gelangen kann, weist dessen Deckel 10.5 mehrere Durchbrüche 50 auf, welche den Träger 26 umgeben.

Bei der vierten Ausführungsform gemäß Fig. 5 trägt die Membran 20 einen sich nach oben konisch verjüngenden scheibenähnlichen Kolben 52, an dem eine vertikale Stange 54 zentral befestigt ist. Die Kolbenstange 54 durchdringt den Gehäusedeckel 10.5 in dessen abgedichtetem Zentrum und trägt eine /relativ starke Schraubenfeder 56, die sich oben an der Innenseite des Gehäusedeckels 10.12 und unten am Kolben 52 abstützt. Die Federkennlinie ist so gewählt, daß nicht nur der von der Stange 54 verursachte Verlust an Kolbenoberfläche an der Kolbenoberseite durch die Stange 54 ausgeglichen wird, sondern darüberhinaus über die Membran 20 auf das Zentrum der Harzfüllung 18 ständig eine Kraft aufgeübt wird, die allerdings kleiner sein muß als die Quellkraft des Harzes.

Am oberen Ende der Kolbenstange 54 befindet sich ein Schaltnocken 58 eines elektrischen Schalters 62 einer im übrigen nicht dargestellten Steueranordnung der Wasserenthärtungsanlage für deren Mehrwegeventil 64; dabei ist die Anordnung zu getroffen, daß der Nocken 58 den Schalter 62 je nach den Umständen schließt oder öffnet,wenn der Kolben 52 weit genug auf der von der Membran 20 abgedeckten geschrumpften Harzfüllung 18 gesunken ist.

Patentanwalt
Dipl.-Phys. M. WOLFF
Kirchheimerstr. 69
D-7000 Stuttgart 75

Reg.-Nr. 200 102

Karl SPIEGL in Aidlingen/Württ.

Härtefühler für Wasserenthärtungsanlagen          14. Januar   1984/H

A n s p r ü c h e

1.) Härtefühler für/Wasserenthärtungsanlagen, mit einer regenerierbaren, sich beim Regenerieren ausdehnenden, in hartem
Wasser schrumpfenden Füllung (18) aus ionenaustauschendem Harz,
welche eine einzige freie Oberfläche und eine dieser in Ausdehnungsrichtung gegenüberliegende Unterfläche aufweist, wobei
die freie Oberfläche zumindest in einem bestimmten Fühlerzustand
im wesentlichen eben ist und die Normale der Oberfläche dann
die Ausdehnungsrichtung darstellt; mit einem Einlaß (14;38, 50)
für Testwasser und einem Auslaß (12;12,36) für Testwasser,
von denen zumindest einer auf der Seite der Unterfläche der
Harzfüllung (18) angeordnet ist, sowie einer Flach-Membran (20);
mit einem Kolben (22; 52), der wenigstens während der Härtefühlung auf der Harzfüllung (18) lagert, und mit einem elektrischen Schalter (28;62), der durch den Kolben (22; 52) mittelbar zu betätigen ist, dadurch gekennzeichnet, daß die Membran
(20) in an sich bekannter Weise ständig an der freien Oberfläche
der Harzfüllung (18) liegt und der Kolben (22; 52) in an sich
bekannter Weise ständig auf der Harzfüllung (18) lagert,
wobei der Kolben spezifisch wesentlich schwerer als Wasser ist
und auf der Membran (20) sitzt.

0154278

2.) Härtefühler nach Anspruch 1, dadurch gekennzeichnet, daß die Membran (20) wasserdurchlässig und harzundurchlässig ist (Fig. 1 - 3,5).

3.) Härtefühler nach Anspruch 2, dadurch gekennzeichnet, daß die Membran (20) aus einem Gewirke besteht (Fig. 1,3,5).

4.) Härtefühler nach Anspruch 2, dadurch gekennzeichnet, daß die Membran (20) aus Gummi besteht und wenigstens einen siebartigen Einsatz (32) aufweist (Fig. 2).

5.) Härtefühler nach einem der Ansprüche 1 bis 4, dadurch gekennzeichnet, daß der wasserhaltige Raum über der Membran (20) und der harzhaltige Raum unter der Membran mittels eines Ausgleichskanals (34) verbunden sind, wobei die Kanalmündung (34.1) in die Harzfüllung (18) ein harzundurchlässiges Gitter aufweist (Fig. 2).

6.) Härtefühler nach einem der Ansprüche 1 bis 5, dadurch gekennzeichnet, daß als elektrischer Schalter in an sich bekannter Weise ein berührungslos betätigbarer Schalter (28) vorgesehen ist (Fig. 1 - 3).

7.) Härtefühler nach Anspruch 6, dadurch gekennzeichnet, daß der Kolben (22) in an sich bekannter Weise mit einem Permanentmagneten (24) versehen ist (Fig. 1 - 3)

8.) Härtefühler nach Anspruch 7, dadurch gekennzeichnet, daß der Kolben (22) eine Sackbohrung (22.1) mit der Membran (20) abgewandter Mündung aufweist, die von einem Ringmagneten (24) gesäumt ist, und an einem zylindrischen Träger (26) eines Reed-Schalters (28) verschiebbar angeordnet ist (Fig. 1 - 3).

9.) Härtefühler nach einem der Ansprüche 1 bis 8, dessen rohrähnliches Gehäuse (10) einen die geschrumpfte Harzfüllung (18)

010284

größtenteils aufnehmenden, weiteren zylindrischen Abschnitt (10.1), einen den Kolben (22) aufnehmenden, engeren zylindrischen Abschnitt (10.2) und einen Deckel (10.5) an diesem aufweist, dadurch gekennzeichnet, daß die zwei zylindrischen Abschnitte (10.1, 10.2) in an sich bekannter Weise durch einen konischen Abschnitt (10.3) verbunden sind, an den sich der am oberen Ende des weiteren zylindrischen Abschnittes (10.1) befestigte Rand der sich in den konischen Abschnitt (10.3) auswölbenden Membran (20) bei quellendem Harz anlegt; und daß der Gehäusedeckel (10.5) als Anschlag für den Kolben (22) vorgesehen ist, der bei Anschlag den sich in den engeren zylindrischen Abschnitt (10.2) auswölbenden zentralen Teil der Membran (20) niederhält (Fig. 1 - 3).

-4-

Fig. 1  Fig. 2  Fig. 3

0154278

0154278

Fig. 4

Fig. 5